# EUROPEAN PATENT APPLICATION

(11) **EP 4 432 676 A1**
(43) Date of publication of application: **18.09.2024**
(21) Application number: 23740549.3
(22) Date of filing: 17.01.2023
(51) Int. Cl.: H04N 21/431, H04N 21/44, H04N 21/234, G06V 20/40

(54) **OPERATION METHOD OF DISPLAY DEVICE AND APPARATUS THEREFOR**

(30) Priority: 17.01.2022 KR 20220006675
(71) Applicant: Samsung Electronics Co., Ltd., Suwon-si, Gyeonggi-do 16677 (KR)
(72) Inventor: JOH, Jongmyoung, Suwon-si, Gyeonggi-do 16677 (KR); HWANG, Junpil, Suwon-si, Gyeonggi-do 16677 (KR)
(74) Representative: Appleyard Lees IP LLP
(86) International application number: PCT/KR2023/000801
(87) International publication number: WO 2023/136706

(57) **Abstract**

Disclosed is an operation method of a display device. Specifically, the operation method of a display device includes: receiving video signals of multiple videos; processing the received multiple video signals and generating a mixed video from the processed multiple video signals; extracting multiple fingerprints corresponding to the respective multiple video signals; transmitting the extracted multiple fingerprints to a server; and obtaining multiple pieces of matching information for the respective multiple fingerprints from the server.

## Description

### Technical Field

Embodiments of the disclosure relate to an operation method of a display device and apparatus therefor.

### BACKGROUND ART

A display device is a device for displaying, on a display, a received and processed video signal provided from a video signal supply source. The display device may recognize a content currently played on the display through automatic content recognition (ACR).

The display device may play two or more contents at the same time through a multi-view. In this case, technology for enabling the two or more contents to be correctly recognized through the ACR is required.

### Disclosure

### Technical Solution

As a technological means for attaining the aforementioned technical objective, an operation method of a display device may include receiving video signals of multiple videos. The operation method of the display device may include processing the received multiple video signals and generating a mixed video from the processed multiple video signals. The operation method of the display device may include extracting multiple fingerprints corresponding to the respective multiple video signals. The operation method of the display device may include transmitting the extracted multiple fingerprints to a server. The operation method of the display device may include obtaining multiple pieces of matching information for the respective multiple fingerprints from the server.

According to a second aspect of the disclosure, a display device may include a display displaying a mixed video in a multi-view. The display device may include a communication module; and a memory storing one or more instructions. The display device may include at least one processor configured to execute one or more instructions. The at least one processor may be configured to execute the one or more instructions to process the video signals of received multiple videos. The at least one processor may be configured to execute the one or more instructions to control to generate a mixed video from the processed multiple video signals. The at least one processor may be configured to execute the one or more instructions to extract multiple fingerprints corresponding to the respective multiple video signals. The at least one processor may be configured to execute the one or more instructions to control the communication module to transmit the multiple fingerprints to the server. The at least one processor may be configured to execute the one or more instructions to obtain multiple pieces of matching information for the respective multiple fingerprints from the server.

According to a third aspect of the disclosure, a recording medium may include a computer-readable recording medium having recorded thereon a program for executing the method, on a computer.

### Description of Drawings

FIG. 1 is a diagram illustrating an operation method in a display device, according to an embodiment.
FIG. 2 is a block diagram for describing a display device, according to an embodiment of the disclosure.
FIG. 3 is a flowchart for describing operations in a display device, according to an embodiment of the disclosure.
FIG. 4 illustrates a specific method of extracting multiple fingerprints from multiple videos, according to an embodiment of the disclosure.
FIG. 5 illustrates a specific method of extracting multiple fingerprints from multiple videos, according to an embodiment of the disclosure.
FIG. 6 is a diagram for describing multiple fingerprints corresponding to multiple videos, according to an embodiment of the disclosure.
FIG. 7 is a diagram for describing a method of transmitting multiple fingerprints corresponding to multiple videos, according to an embodiment of the disclosure.
FIG. 8 is a diagram for describing a method of transmitting multiple fingerprints corresponding to multiple videos, according to an embodiment of the disclosure.
FIG. 9 is a diagram for describing a method of obtaining multiple pieces of matching information corresponding to multiple fingerprints, according to an embodiment of the disclosure.
FIG. 10 is a diagram for describing an example of recommending an additional content to a user with the use of multiple pieces of matching information, according to an embodiment of the disclosure.

### Mode for Invention

Terms as used herein will be described before detailed descriptions of embodiments of the disclosure are provided.

The terms are selected as common terms that are currently widely used, taking into account principles of the disclosure, which may however depend on intentions of those of ordinary skill in the art, judicial precedents, emergence of new technologies, and the like. Some terms as used herein are selected at the applicant's discretion, in which case, the terms will be explained later in detail in connection with embodiments of the disclosure. Therefore, the terms should be defined based on their meanings and descriptions throughout the disclosure.

The term "include (or including)" or "comprise (or comprising)" is inclusive or open-ended and does not exclude additional, unrecited elements or method steps. The term "module" (or sometimes "unit") as herein used refers to software or a hardware component, such as FPGA or ASIC, which performs some functions. However, the unit is not limited to software or hardware. The module may be configured to be stored in an addressable storage medium, or to execute one or more processors. For example, the unit may include components, such as software components, object-oriented software components, class components and task components, processes, functions, attributes, procedures, subroutines, segments of program codes, drivers, firmware, microcodes, circuits, data, databases, data structures, tables, arrays, and variables. Functions served by components and units may be combined into a less number of components and units, or further divided into a more number of components and units.

An embodiment of the disclosure will now be described in detail with reference to accompanying drawings so as to be readily practiced by those of ordinary skill in the art. However, an embodiment of the disclosure may be implemented in many different forms, and is not limited to that discussed herein. In the drawings, parts unrelated to the description are omitted for clarity, and like numerals refer to like elements throughout the specification.

When A is said to "be connected" to B, it means to be "directly connected" to B or "electrically connected" to B with C located between A and C. The term "include (or including)" or "comprise (or comprising)" is inclusive or open-ended and does not exclude additional, unrecited elements or method steps, unless otherwise mentioned.

The disclosure will now be described with reference to accompanying drawings.

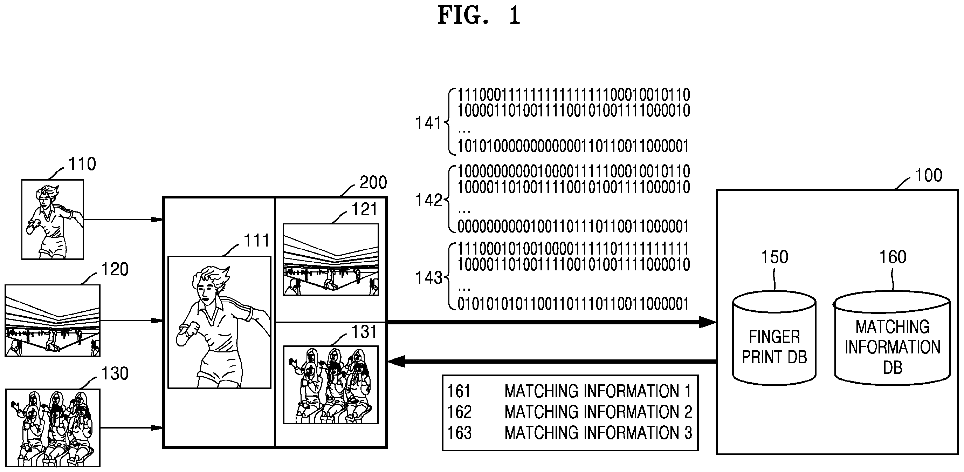

FIG. 1 is a diagram illustrating an operation method in a display device, according to an embodiment.

Referring to FIG. 1, a display device 200 may extract multiple fingerprints from multiple videos, transmit the extracted multiple fingerprints to a server, and thus obtain multiple pieces of matching information corresponding to the multiple fingerprints.

In an embodiment of the disclosure, the display device 200 may obtain multiple videos from outside. Referring to FIG. 1, the display device 200 may obtain video 1 110 related to soccer, video 2 120 related to soccer and video 3 130 related to idol music. The display device 200 may receive video 1 110 related to soccer, video 2 120 related to soccer and video 3 130 related to idol music through different sources. For example, the display device 200 may receive video 1 110 related to soccer through a tuner for receiving live stream, video 2 120 related to soccer through an HDMI, and video 3 130 related to idol music through Thunderbolt.

In an embodiment of the disclosure, the display device 200 may process video signals for the received multiple videos, and generate a mixed video from the processed multiple video signals. Specifically, the display device 200 that supports a multi-view of the multiple videos may generate the mixed video from the processed multiple video signals, based on screen split information. For example, referring to FIG. 1, the screen split information may include information indicating that video 1 110 is displayed in the largest size and information indicating that video 2 120 and video 3 130 are displayed on half the scale of video 1 110. Furthermore, the screen split information may also include information about where to display video 1 110, video 2 120 and video 3 130 on a display of the display device 200.

In an embodiment of the disclosure, the display device 200 may generate the mixed video from the multiple videos according to the screen split information. For example, referring to FIG. 1, the display device 200 may generate the mixed video based on information for displaying video 1 110 in a left area 111 of the display, video 2 120 in an area 121 corresponding to the first quadrant of the display, and video 3 130 in an area 131 corresponding to the fourth quadrant of the display. Furthermore, the generated mixed video may be displayed on the display of the display device 200.

In an embodiment of the disclosure, the display device 200 may extract multiple fingerprints from the multiple videos. Throughout the specification, the fingerprint may refer to data in the format of binary numbers obtained from a video, and the fingerprint may be data determined with consideration for the size, shape or position of an object included in a video frame of the video. Fingerprints extracted from different videos may be different. For example, referring to FIG. 1, the display device 200 may obtain fingerprint 1 141 corresponding to video 1 110, fingerprint 2 142 corresponding to video 2 120 and fingerprint 3 143 corresponding to video 3 130. The obtained fingerprint 1 141, fingerprint 2 142 and fingerprint 3 143 may be data comprised of different binary numbers.

In an embodiment of the disclosure, the display device 200 may transmit the multiple fingerprints to a server 100 and obtain multiple pieces of matching information corresponding to the multiple fingerprints. Specifically, the multiple fingerprints corresponding to the multiple videos are different from one another, so the server 100 may search a fingerprint DB 150 whether there are fingerprints matching the received multiple fingerprints. For example, referring to FIG. 1, the server 100 may identify multiple fingerprints matching the received fingerprint 1 141, fingerprint 2 142 and fingerprint 3 143 among multiple fingerprints included in the fingerprint DB 150. Furthermore, the server 100 may extract multiple pieces of matching information corresponding to the multiple fingerprints identified from a matching information DB 160. The extracted multiple pieces of matching information may be information including metadata about corresponding multiple videos. For example, the multiple pieces of matching information may include channel information of the multiple videos.

In an embodiment of the disclosure, the server 100 may transmit the extracted multiple pieces of matching information to the display device 200. For example, referring to FIG. 1, the transmitted multiple pieces of matching information may include matching information 1 161, matching information 2 162 and matching information 3 163. Furthermore, matching information 1 161, matching information 2 162 and matching information 3 163 may correspond to fingerprint 1 141, fingerprint 2 142 and fingerprint 3 143, respectively. Moreover, the display device 200 may recommend a suitable additional content to the user of the display device 200 by obtaining matching information 1 161, matching information 2 162 and matching information 3 163 corresponding to video 1 110, video 2 120 and video 3 130.

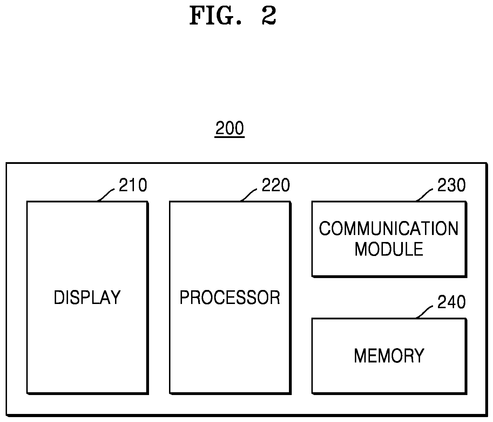

FIG. 2 is a block diagram for describing a display device, according to an embodiment of the disclosure.

In an embodiment of the disclosure, the display device 200 may be a device for receiving video signals of multiple videos and obtaining multiple pieces of matching information corresponding to the multiple videos. In an embodiment of the disclosure, the display device 200 may include a display 210, a processor 220, a communication module 230, a memory 240, an audio output interface (not shown) and a power supplier (not shown). The aforementioned components will now be described in detail.

The display 210 may include a display panel and a controller (not shown) for controlling the display panel, and the display 210 may refer to a display built into the display device 200. The display panel may be implemented as various types of displays such as a liquid crystal display (LCD), an organic light emitting diode (OLED) display, active-matrix (AM) OLEDs, a plasma display panel (PDP), etc. The display panel may be implemented to be flexible, transparent or wearable. The display 210 may be combined with a touch panel and provided as a touch screen. For example, the touch screen may include an integrated module in which the display panel and a touch panel are combined in a layered structure.

In an embodiment, the display 210 may display a mixed video in a multi-view. Furthermore, the display device 200 may output a user interface (Ul) related to a recommended content on the display 210 in recommending the suitable content by using the multiple pieces of matching information.

The processor 220 may control general operation of the display device 200, and execute the one or more instructions stored in the memory 240 to control an operation of the display device 200. For example, the processor 220 may execute programs stored in the memory 240 to generally control the display 210, the communication module 230, the memory 240, an audio output interface (not shown) and a power supplier (not shown).

The processor 220 may include at least one of a RAM, a ROM, a CPU, a GPU and a bus. The RAM, ROM, CPU and GPU may be interconnected via the bus. In an embodiment of the disclosure, the processor 220 may include an AI processor for building up a learning network model without being limited thereto. In an embodiment of the disclosure, the AI processor may be implemented in a separate chip from the processor 220. In an embodiment of the disclosure, the AI processor may be a universal chip.

In an embodiment of the disclosure, the processor 220 may execute the one or more instructions to process video signals of received multiple videos, generate a mixed video from the processed multiple video signals, extract multiple fingerprints corresponding to the respective multiple video signals, control the communication module to transmit the multiple fingerprints to a server, and obtain multiple pieces of matching information for the respective multiple fingerprints from the server.

In an embodiment of the disclosure, the processor 220 may obtain multiple video frames corresponding to the respective multiple videos based on the processed multiple video signals, and extract multiple fingerprints based on the obtained multiple video frames.

In an embodiment of the disclosure, the processor 220 may obtain a video frame of the mixed video from the mixed video, obtain multiple video frames corresponding to the respective multiple videos by cropping the video frame of the mixed video, and extract multiple fingerprints based on the multiple video frames.

In an embodiment of the disclosure, the processor 220 may generate the mixed video based on screen split information for the multiple videos, and obtain the multiple video frames corresponding to the respective multiple videos by cropping the video frame of the mixed video according to the screen split information.

In an embodiment of the disclosure, the processor 220 may detect at least one border line between the multiple videos in the video frame of the mixed video, and obtain multiple video frames corresponding to the respective multiple videos by cropping the video frame of the mixed video based on the detected at least one border line.

In an embodiment of the disclosure, the processor 220 may control the communication module 230 to transmit each of the extracted multiple fingerprints for each of the respective multiple videos to the server.

In an embodiment of the disclosure, the processor 220 may control the communication module 230 to transmit the extracted multiple fingerprints as a whole to the server.

In an embodiment of the disclosure, the processor 220 may determine multiple weights for the multiple pieces of matching information corresponding to the multiple videos based on the screen split information used to generate the mixed video, and obtain multiple pieces of matching information corresponding to the respective multiple fingerprints according to the determined multiple weights.

In an embodiment of the disclosure, the processor 220 may identify a video having sound output from an audio output interface from among the multiple videos, and obtain the multiple pieces of matching information corresponding to the respective multiple fingerprints by setting a preset weight for matching information for the identified video.

In an embodiment of the disclosure, the processor 220 may control to receive multiple videos. For example, the processor 220 may control the display device 200 to receive multiple videos input from various data sources. For example, the display device 200 may be connected to an external device wiredly/wirelessly, and may forward image, video and sound signals input through the external device to the processor 220 of the display device 200. The display device 200 may include a tuner for receiving live stream coming in on broadcast, a USB for reproducing videos, an HDMI for receiving an external input, a component, etc. Specifically, the display device 200 may include a USB terminal, a composite video banking sync (CVBS) terminal, a component terminal, an S-video terminal (analog), a digital visual interface (DVI) terminal, a high definition multimedia interface (HDMI) terminal, a display port (DP), Thunderbolt, RGB terminals, a D-SUB terminal, etc. In an embodiment of the disclosure, the received video signal may be in a bitstream format corresponding to the video.

The communication module 230 may include one or more components that enable communication between the display device 200 and a plurality of devices located around the display device 200. The communication module 230 may include one or more components that enable communication between the display device 200 and a server. Specifically, the communication module 230 may perform communication with various types of external devices or servers according to various types of communication schemes. The communication module 230 may also include a short-range communication module.

The short-range communication module may include a bluetooth communication module, a bluetooth low energy (BLE) communication module, a near field communication (NFC) module, a WLAN, e.g., Wi-Fi, communication module, a Zigbee communication module, an infrared data association (IrDA) communication module, a Wi-Fi direct (WFD) communication module, a ultra wideband (UWB) communication module, an Ant+ communication module, an Ethernet communication module, etc., without being limited thereto.

The memory 240 may store a program for processing and controlling of the processor 220. According to an embodiment of the present disclosure, the memory 240 may store one or more instructions. The memory 240 may include at least one of an internal memory (not shown) and an external memory (not shown). The memory 240 may store various programs and data used for operation of the display device 200.

The internal memory may include, for example, at least one of a volatile memory (e.g., a dynamic RAM (DRAM), an SRAM, a synchronous DRAM (SDRAM), etc.), a non-volatile memory (e.g., a one-time programmable ROM (OTPROM), a PROM, an erasable PROM (EPROM), an EEPROM, a mask ROM, a flash ROM, etc.), a hard disc drive (HDD) or a solid state drive (SSD). In an embodiment of the disclosure, the processor 220 may load an instruction or data received from at least one of the non-volatile memory or another component onto the volatile memory and process the instruction or data. Furthermore, the processor 220 may preserve data received from or generated by the other component in the non-volatile memory.

The external memory may include, for example, at least one of compact flash (CF), secure digital (SD), micro secure digital (Micro-SD), mini secure digital (Mini-SD), extreme digital (xD), and a memory stick.

The display device 200 may further include an audio output interface (not shown). The audio output interface may be an output comprised of at least one speaker. In some embodiments, the processor 220 may output, through the audio output interface, an audio signal of a video having audio sound output among multiple videos. The display device 200 may also output sound through an external electronic device (e.g., a bluetooth speaker) connected through the communication module 230, but is not limited thereto.

The display device 200 may further include a power supplier (not shown). The power supplier (not shown) may supply power to the components of the display device 200 under the control of the processor 220. The power supplier (not shown) may supply power received from an external power source via a power cord to the respective components of the display device 200 under the control of the processor 220.

However, not all the illustrated components are essential. The display device 200 may be implemented with more or fewer components than illustrated ones.

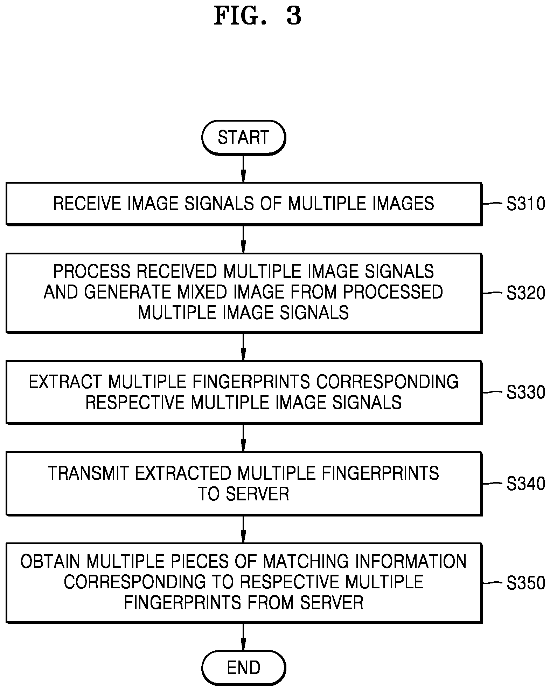

FIG. 3 is a flowchart for describing operations in a display device, according to an embodiment of the disclosure.

In operation S310, the display device 200 according to an embodiment of the disclosure may receive video signals of multiple videos.

In an embodiment of the disclosure, the display device 200 may receive video signals of multiple videos. For example, the display device 200 is a device capable of reproducing multiple videos or contents, and may receive multiple videos input from various data sources. For example, referring to FIG. 1, the display device 200 may receive video 1 110 through the tuner, and receive video 2 120 and video 3 130 through the HDMI for receiving an external input. Furthermore, for example, the video signal received by the display device 200 may be represented by data in the format of bitstream resulting from encoding multiple videos, but is not limited thereto.

In operation S320, the display device 200 may process the received multiple video signals, and generate a mixed video from the processed multiple video signals.

In an embodiment of the disclosure, the display device 200 may process the received multiple video signals, and generate the mixed video from the processed multiple video signals. The processor 220 of the display device 200 may process each of the multiple video signals, and control to generate the mixed video to be reproduced on the display 210 from the processed multiple video signals. The display device 200 may generate the processed multiple video signals corresponding to the respective multiple videos. The processed multiple video signals may be corresponding multiple video frames.

In an embodiment of the disclosure, the display device 200 may generate the mixed video based on the multiple video signals obtained from different sources and having gone through image processing. Screen split information used to generate the mixed video may be preset and stored in the memory 240, but is not limited thereto. For example, the display device 200 may determine the screen split information to be used to generate the mixed video based on scale information relating to a scale to be applied to each of the multiple video signals. The display device 200 may use the screen split information to generate the mixed video based on the multiple video signals.

In operation S330, the display device 200 may extract multiple fingerprints corresponding to the respective multiple video signals.

In an embodiment of the disclosure, the display device 200 may obtain multiple video frames corresponding to the respective multiple videos based on the processed multiple video signals. For example, in a case that the display device 200 receives multiple videos from multiple sources, the display device 200 may obtain multiple video frames corresponding to the multiple videos before generating a mixed video based on the processed multiple video signals. Specifically, the display device 200 may obtain multiple video frames corresponding to the respective multiple videos based on the processed multiple video signals. The multiple video frames may refer to screen shots of the multiple videos.

In an embodiment of the disclosure, the display device 200 may obtain multiple video frames corresponding to the respective multiple videos by cropping a video frame from the mixed video. For example, in a case that the display device 200 receives multiple videos from one source, the display device 200 may obtain multiple video frames corresponding to the respective multiple videos by cropping a video frame from the mixed video. Specifically, the display device 200 may obtain a video frame of the mixed video from the mixed video, obtain multiple video frames corresponding to the respective multiple videos by cropping the video frame of the mixed video, and extract multiple fingerprints based on the multiple video frames.

For example, the display device 200 may obtain multiple video frames corresponding to the respective multiple videos by cropping the video frame of the mixed video according to the screen split information used to generate the mixed video. Furthermore, for example, the display device 200 may detect at least one border line between the multiple videos in the video frame of the mixed video, and obtain multiple video frames corresponding to the respective multiple videos by cropping the video frame of the mixed video based on the detected at least one border line.

In operation S340, the display device 200 according to an embodiment of the disclosure may transmit the extracted multiple fingerprints to the server.

In an embodiment of the disclosure, the display device 200 may transmit the extracted multiple fingerprints to the server to obtain multiple pieces of matching information corresponding to the extracted multiple fingerprints. In the specification, the server may be a server including a DB of multiple fingerprints for various videos and matching information DB including metadata corresponding to the multiple pieces of matching information for various videos. In the specification, the matching information may refer to the metadata about the video For example, the matching information may refer to metadata that indicates video titles, broadcasting companies where the videos are produced, etc.

The display device 200 may transmit each of the multiple fingerprints for each of the multiple videos to the server. Alternatively, the display device 200 may transmit the extracted multiple fingerprints as a whole to the server.

In operation S350, the display device 200 may obtain multiple pieces of matching information for the respective multiple fingerprints from the server.

In an embodiment of the disclosure, the server may transmit the multiple pieces of matching information corresponding to the respective multiple fingerprints to the display device 200. For example, referring to FIG. 1, the server 100 may identify multiple fingerprints matching the received multiple fingerprints from among the multiple fingerprints included in the fingerprint DB 150. Furthermore, the server 100 may extract multiple pieces of matching information corresponding to the multiple fingerprints identified from a matching information DB 160. The server 100 may transmit the extracted multiple pieces of matching information to the display device 200. The multiple pieces of matching information obtained by the display device 200 may include at least one of genre information for the multiple videos and channel information for the multiple videos. Furthermore, the display device 200 may recommend additional contents for the user by using the multiple pieces of matching information.

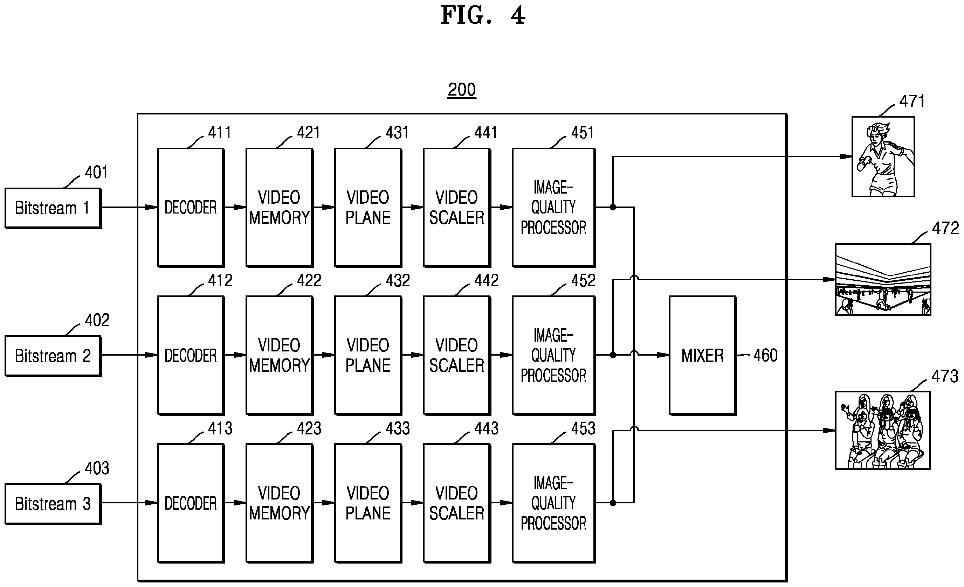

FIG. 4 illustrates a specific method of extracting multiple fingerprints from multiple videos, according to an embodiment of the disclosure.

Referring to FIG. 4, In an embodiment of the disclosure, the display device 200 may obtain multiple video frames corresponding to respective multiple videos based on image-processed multiple video signals. The display device 200 may extract multiple fingerprints based on the multiple video frames.

In an embodiment of the disclosure, when receiving multiple videos from multiple sources, the display device 200 may obtain multiple video frames corresponding to the respective multiple videos based on the image-processed multiple video signals.

In an embodiment of the disclosure, the display device 200 may include a module for processing the received video signal, and the display device 200 may process the multiple video signals in parallel. For example, referring to FIG. 4, the display device 200 may include multiple decoders, multiple video memories, multiple video planes, multiple video scalers, multiple image-quality processors and a mixer 460 in order to process the multiple video signals. Specifically, the multiple decoders may include a decoder 411, a decoder 412 and a decoder 413, the multiple video memories may include a video memory 421, a video memory 422 and a video memory 423, the multiple video planes may include a video plane 431, a video plane 432 and a video plane 433, the multiple video scalers may include a video scaler 441, a video scaler 442 and a video scaler 443, and the multiple image-quality processors may include an image-quality processor 451, an image-quality processor 452 and an image-quality processor 453, without being limited thereto. In the specification, the term image-processed multiple video signals may refer to video signals obtained through the decoder, the memory, the video plane, the video scaler and the image-quality processor.

The decoder of the display device 200 may decode video signals of the received multiple videos. The video signals of the multiple videos may be in the format of bitstream, and the decoder may output decoded video signals by decoding the video signals of the received multiple videos. The decoded video signal may refer to a video frame of a video. The video memory of the display device 200 may be comprised of memories that receive video signals decoded by the decoder. Furthermore, the decoded video signal stored in the video memory may be output from the video memory to the video plane. The video plane of the display device 200 may receive and store the decoded video signal output from the video memory. Specifically, the video plane may operate as a buffer for obtaining and storing the decoded video signal to output a screen in the display device 200. The video scaler of the display device 200 receives the decoded video signal output from the video plane, and performs scaling suitable for the decoded video signal. For example, the video scaler may suitably scale and convert the size of the received video frame to a video frame in a suitable format. The image-quality processor of the display device 200 may receive the scaled video frame obtained from the video scaler and perform an image-quality process. For example, the image-quality processor may perform at least one of de-noising, a contrast process, or RGB correction on the scaled video frame. However, the image-quality processing scheme performed by the display device is not limited to the aforementioned example. The display device may perform the image-quality process with various post-processes after decoding.

The mixer of the display device 200 may receive the image-quality-processed multiple video frames obtained from the multiple videos and generate a mixed video. Specifically, the mixer may generate the mixed video based on the screen split information and the image-quality-processed multiple video frames. Furthermore, for example, in a case that the video received from one source is a video including multiple contents, the video itself input to the mixer of the display device 200 may be a mixed video including multiple videos.

In an embodiment of the disclosure, the display device 200 may obtain multiple bitstreams for multiple videos, i.e., bitstream 1 401, bitstream 2 402 and bitstream 3 403. The display device 200 may perform image processing on each of bitstream 1 401, bitstream 2 402 and bitstream 3 403. In an embodiment of the disclosure, the display device 200 may obtain a video frame corresponding to each of the multiple videos. For example, referring to FIG. 4, the display device 200 may obtain a video frame 471 for bitstream 1 401 of video 1 from the image-quality processor 451. Similarly, the display device 200 may obtain video frame 472 of video 2 from the image-quality processor 452, and obtain video frame 473 of video 3 from the image-quality processor 453.

In an embodiment of the disclosure, the display device 200 may extract a fingerprint corresponding to video 1 based on the video frame 471 of video 1, extract a fingerprint corresponding to video 2 based on the video frame 472 of video 2, and extract a fingerprint corresponding to video 3 based on the video frame 473 of video 3.

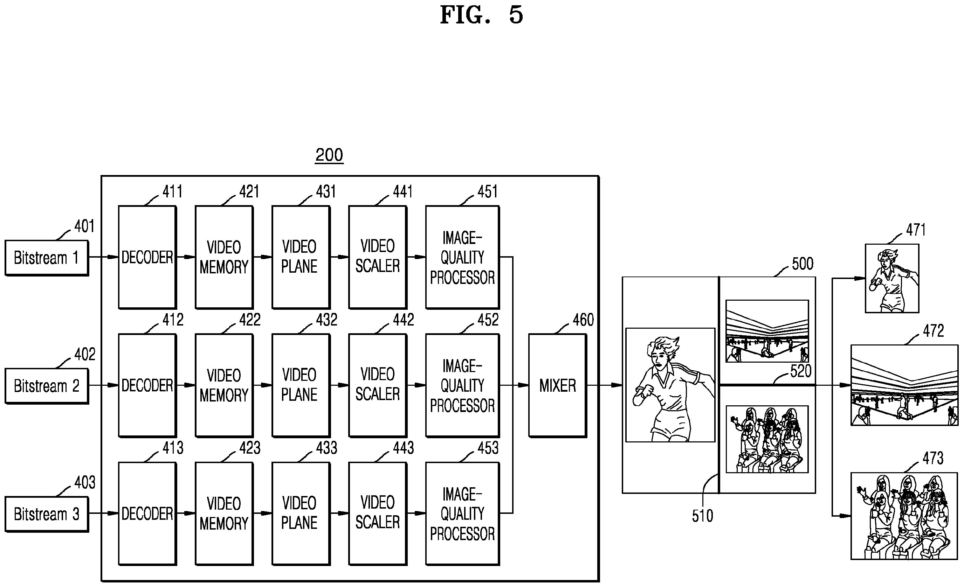

FIG. 5 illustrates a specific method of extracting multiple fingerprints from multiple videos, according to an embodiment of the disclosure.

Referring to FIG. 5, the display device 200 may obtain multiple video frames corresponding to respective multiple videos by cropping a video frame from a mixed video. Furthermore, the display device 200 may extract multiple fingerprints based on the multiple video frames. Especially, in a case that the display device 200 receives multiple videos from one source, the display device 200 may obtain multiple video frames corresponding to the respective multiple videos by cropping the video frame from the mixed video.

In an embodiment of the disclosure, the display device 200 may generate a mixed video 500 through the mixer 460. The display device 200 may generate the mixed video 500 according to preset screen split information based on video 1, video 2 and video 3. The mixed video 500 may be a video having video 1, video 2 and video 3 split based on a vertical border line 510 and a horizontal border line 520.

In an embodiment of the disclosure, the display device 200 may detect at least one border line between the multiple videos in the video frame of the mixed video 500, and obtain multiple video frames corresponding to the respective multiple videos by cropping the video frame of the mixed video based on the detected at least one border line. For example, referring to FIG. 5, the display device 200 may detect the vertical border line 510 and the horizontal border line 520 in the video frame of the mixed video 500. The display device 200 may distinguish between video 1, video 2 and video 3 based on the vertical border line 510 and the horizontal border line 520. Specifically, the display device 200 may obtain video frame 471 of video 1, video frame 472 of video 2 and video frame 473 of video 3 from the mixed video 500 based on the vertical border line 510 and the horizontal border line 520.

In an embodiment of the disclosure, the display device 200 may obtain multiple video frames corresponding to the respective multiple videos by cropping the video frame of the mixed video according to the screen split information. The display device 200 may distinguish between video 1, video 2 and video 3 included in the mixed video based on the screen split information. In the specification, the screen split information is information used to display video 1, video 2, and video 3 included in the mixed video 500 on the display 210, and may be stored in the mixer 460. For example, the screen split information may be information indicating that video 1 is displayed on the left side of the mixed video 500, video 2 on the first quadrant of the mixed video 500 and video 3 on the fourth quadrant of the mixed video 500. Hence, the display device 200 may distinguish between video 1, video 2 and video 3 included in the mixed video based on the screen split information, and the display device 200 may obtain multiple video frames corresponding to the respective multiple videos by cropping the video frame of the mixed video.

In an embodiment of the disclosure, the display device 200 may extract a fingerprint corresponding to video 1 based on the video frame 471 of video 1, extract a fingerprint corresponding to video 2 based on the video frame 472 of video 2, and extract a fingerprint corresponding to video 3 based on the video frame 473 of video 3.

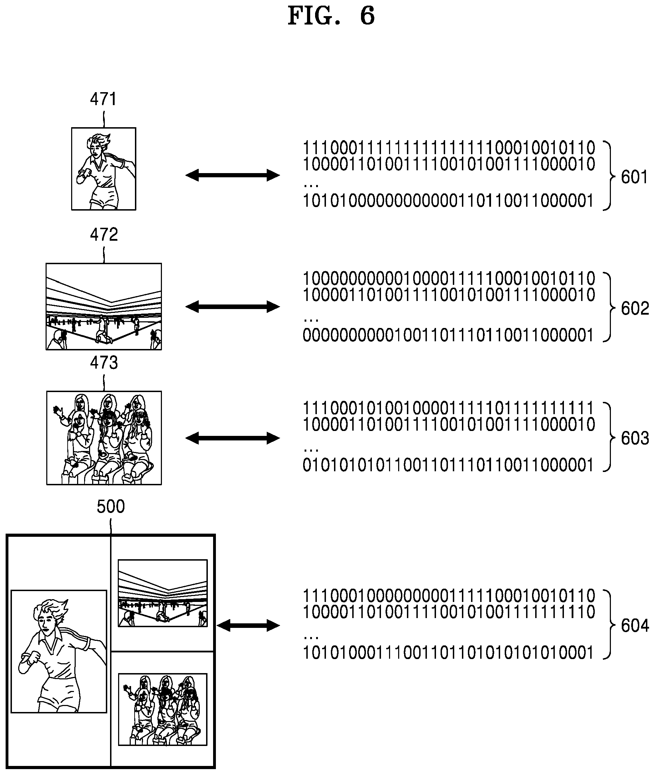

FIG. 6 is a diagram for describing multiple fingerprints corresponding to multiple videos, according to an embodiment of the disclosure.

In an embodiment of the disclosure, the display device 200 may extract multiple fingerprints corresponding to multiple videos.

In an embodiment of the disclosure, the fingerprint may be data comprised of binary numbers obtained from the video frame of the video, and the fingerprint may be extracted differently for each video. For example, the display device 200 may obtain fingerprint 1 601 from the video frame 471 of video 1 by considering that there is a soccer player in the middle region of the video frame 471 of video 1. As there are many soccer players or many singers in the middle region of the video frame 472 of video 2 and the video frame 473 of video 3, extracted fingerprint 2 602 and fingerprint 3 603 may be different from fingerprint 1 601.

In an embodiment of the disclosure, in a case that the display device 200 obtains a fingerprint 604 from the mixed area 500 of FIG. 5, the fingerprint 604 may be different from fingerprint 1 601, fingerprint 2 602 and fingerprint 3 603. Specifically, as the middle region of the mixed video 500 may include a portion of video 1, a portion of video 2 and portion of video 3, the extracted fingerprint 604 may be different from each of fingerprint 1 601, fingerprint 2 602 and fingerprint 3 603.

Hence, even when the display device 200 transmits the fingerprint 604 to the server, the server may not match between the finger print 604 and fingerprints corresponding to video 1, video 2 and video 3 included in the mixed video corresponding to the fingerprint 604. Accordingly, the display device 200 may receive multiple videos, and obtain multiple pieces of matching information for the multiple videos by extracting multiple fingerprints corresponding to the received multiple videos.

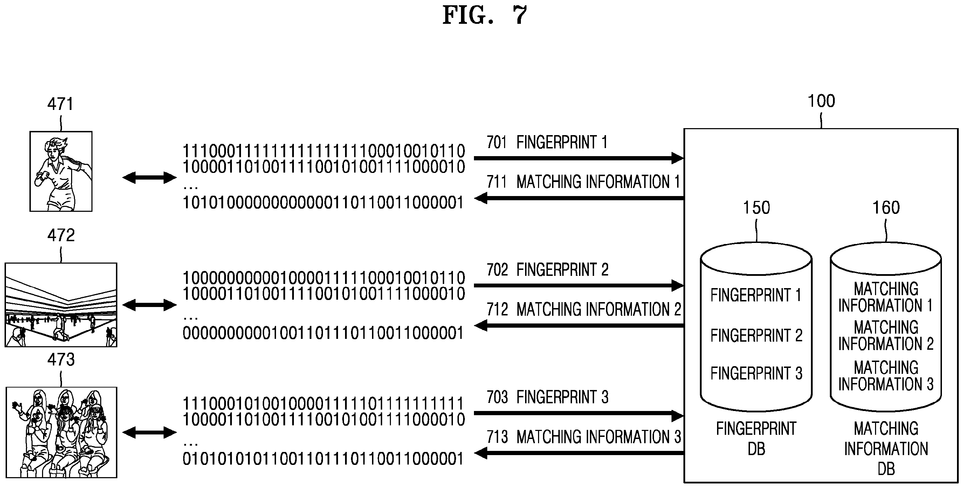

FIG. 7 is a diagram for describing a method of transmitting multiple fingerprints corresponding to multiple videos, according to an embodiment of the disclosure.

Referring to FIG. 7, the display device 200 may transmit each of the extracted multiple fingerprints for each of the multiple videos to the server. In the specification, the transmitting to the server may also be said as querying to the server.

In an embodiment of the disclosure, the display device 200 may extract multiple fingerprints to be transmitted to the server 100 from multiple videos. For example, referring to FIG. 7, the display device 200 may extract fingerprint 1 701 from the video frame 471 of video 1, fingerprint 2 702 from the video frame 472 of video 2 and fingerprint 3 703 from the video frame 473 of video 3.

The display device 200 may transmit each of fingerprint 1 701, fingerprint 2 702 and fingerprint 3 703 to the server 100. Referring to FIG. 7, the server 100 may receive fingerprint 1 701 and transmit matching information 1 711 corresponding to fingerprint 1 701 to the display device 200, receive fingerprint 2 702 and transmit matching information 2 712 corresponding to fingerprint 2 702 to the display device 200, and receive fingerprint 3 703 and transmit matching information 3 713 corresponding to fingerprint 3 703 to the display device 200.

In an embodiment of the disclosure, once the display device 200 transmits fingerprint 1 701, the server 100 may identify a fingerprint that matches the received fingerprint 1 701 from among the multiple fingerprints stored in the fingerprint DB 150. As the fingerprint is binary number data to identify a video, the display device 200 may determine the received fingerprint 1 701 that matches the identified fingerprint as the fingerprint for video 1. Furthermore, the server 100 may extract matching information 1 711 corresponding to the fingerprint identified from the matching information DB 160, and transmit the extracted matching information 1 711 to the display device 200. Similar operations may be performed for fingerprint 2 702 and fingerprint 3 703, and the server 100 may sequentially transmit the extracted matching information 2 712 and the extracted matching information 3 713 to the display device.

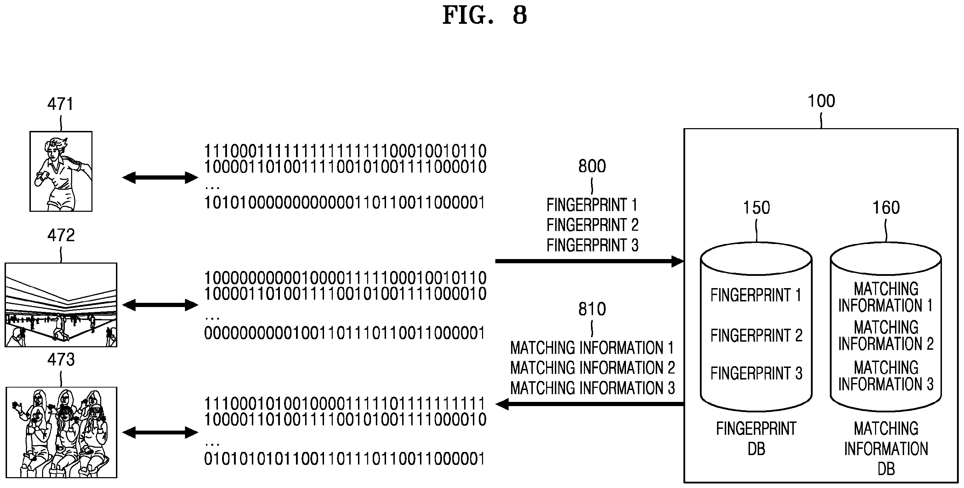

FIG. 8 is a diagram for describing a method of transmitting multiple fingerprints corresponding to multiple videos, according to an embodiment of the disclosure.

Referring to FIG. 8, the display device 200 may transmit the extracted multiple fingerprints as a whole to the server.

In an embodiment of the disclosure, the display device 200 may extract multiple fingerprints to be transmitted to the server 100 from multiple videos. For example, referring to FIG. 8, the display device 200 may obtain multiple fingerprints 800 for video frame 471 of video 1, video frame 472 of video 2, and video frame 473 of video 3. For example, referring to FIG. 8, the multiple fingerprints 800 may include fingerprint 1, fingerprint 2 and fingerprint 3.

In an embodiment of the disclosure, the display device 200 may transmit the multiple fingerprints 800 as a whole to the server 100. The server 100 may divide the received multiple fingerprints 800 into fingerprint 1, fingerprint 2 and fingerprint 3 before identifying fingerprints that match the received fingerprints from among the multiple fingerprints stored in the fingerprint DB 150. The server 100 may receive information for dividing the multiple fingerprints 800 into fingerprint 1, fingerprint 2 and fingerprint 3 from the display device 200.

The server 100 may perform an operation similar to the matching operation in FIG. 7 for each of the divided fingerprint 1, fingerprint 2 and fingerprint 3. For example, the server 100 may identify a fingerprint corresponding to fingerprint 1 from among the multiple fingerprints stored in the fingerprint DB 150. The server 100 may extract matching information 1 corresponding to the identified fingerprint among the multiple pieces of matching information stored in the matching information DB 160. Similar operations may be performed for fingerprint 2 and fingerprint 3 for the server 100 to extract matching information 2 and matching information 3.

In an embodiment of the disclosure, the server 100 may transmit multiple pieces of matching information 810 including the extracted matching information 1, matching information 2 and matching information 3 to the display device 200.

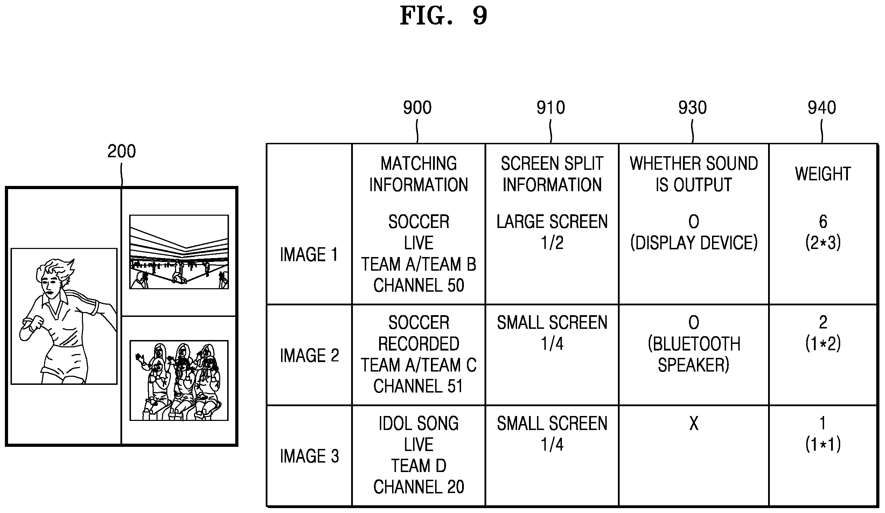

FIG. 9 is a diagram for explaining a method of obtaining multiple pieces of matching information corresponding to multiple fingerprints, according to an embodiment of the disclosure.

In an embodiment of the disclosure, multiple pieces of matching information 900 may include at least one of genre information for the multiple videos and channel information for the multiple videos. For example, referring to FIG. 9, matching information of video 1 may be information including genre information indicating a soccer match between teams A and B, which is broadcast live, and channel information indicating that the channel is 50. Matching information of video 2 may be information including genre information indicating a soccer match between teams A and C, which is recorded on video, and channel information indicating that the channel is 51. Matching information of video 3 may be information including genre information indicating an idol song of team D, which is live on air, and channel information indicating that the channel is 20

In an embodiment of the disclosure, the display device 200 may determine multiple weights for the multiple videos, and obtain multiple pieces of matching information corresponding to the multiple fingerprints according to the multiple weights. The multiple weights may be equally applied to the multiple videos, a current video that the user usually watches may be weighed, or the multiple weights may be determined based on the size of each video displayed on the display 210. Furthermore, the multiple weights may be determined in a way that gives a bigger weight to a video having sound, but are not limited thereto. Moreover, weights determined in two or more ways may be simultaneously applied.

In an embodiment of the disclosure, the display device 200 may determine multiple weights for the multiple pieces of matching information based on screen split information 910. The display device 200 may obtain screen split information used to generate a mixed video, determine multiple weights for the multiple pieces of matching information corresponding to the multiple videos based on the screen split information, and obtain multiple pieces of matching information corresponding to the respective multiple fingerprints according to the determined multiple weights. For example, referring to FIG. 9, the display device 200 may obtain the screen split information used to generate the mixed video. For example, the screen split information may include information indicating that video 1 displayed as the biggest on the display 210 is output in a large screen and that videos 2 and 3 are output in small screens. Specifically, the screen split information may include information indicating that video 1 is being played in half (1/2) the area of the display 210, video 2 is being played in a quarter (1/4) of the area of the display 210 and video 3 is being played in another quarter (1/4) of the area of the display 210. Hence, the display device 200 may determine a weight for video 1 to be '2', and weights for images 2 and 3 to be '1'.

In an embodiment of the disclosure, the display device 200 may set multiple weights for the multiple pieces of matching information based on whether sound is output 930. The display device 200 may identify a video having sound output from the display device, and obtain multiple pieces of matching information corresponding to the respective multiple fingerprints by setting a preset weight for matching information for the identified video. For example, referring to FIG. 9, some of the multiple videos displayed by the display device 200 may be output along with sound. Sound signal of video 1 may be output through an audio output interface of the display device 200, and sound signal of video 2 may be output through a bluetooth speaker connected to the display device 200. Even for videos with sound output, a weight for matching information of a video with sound output through the audio output interface of the display device 200 may be set to be larger than a weight for matching information of a video with sound output through the bluetooth speaker.

For example, referring to FIG. 9, the display device 200 may determine a weight for the matching information of video 1 with sound output through the audio output interface to be preset '3', a weight for the matching information of video 2 with sound output through the bluetooth speaker to be preset '2', and a weight for the matching information of video 3 having no sound output to be '1'.

In an embodiment of the disclosure, the display device 200 may set weights 940 for the multiple pieces of matching information by considering the screen split information 910 and whether sound is output 930 as well. For example, with consideration for the determined weights for the multiple videos, the weight for video 1 may be determined to be '6', the weight for video 2 may be determined to be '2' and the weight for video 3 may be determined to be '1'. Accordingly, the display device 200 may obtain the multiple pieces of matching information according to the different weights by considering the screen split information relating to displaying of the multiple videos and whether sound is output as well.

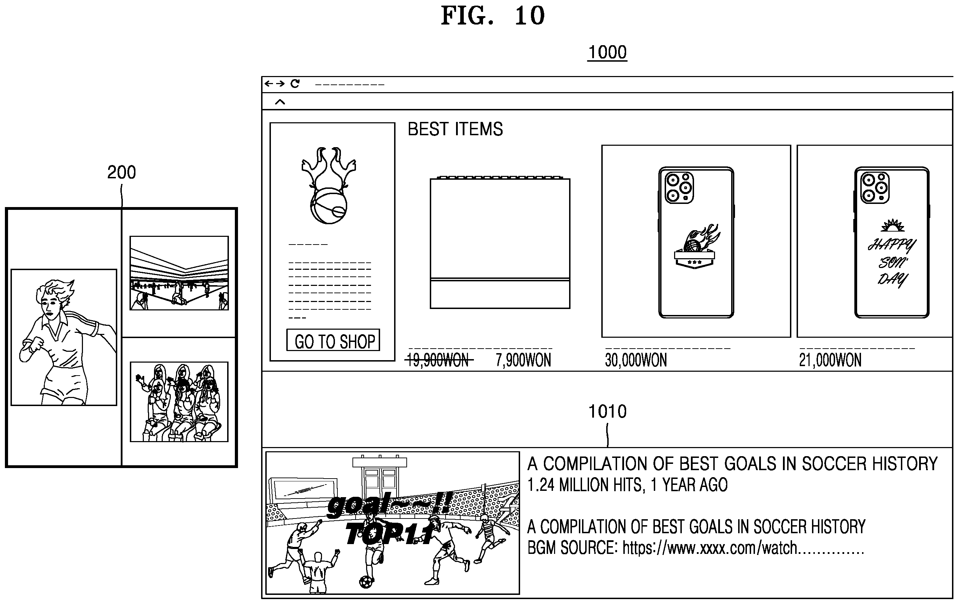

FIG. 10 is a diagram for describing an example of recommending an additional content to a user with the use of multiple pieces of matching information, according to an embodiment of the disclosure.

Referring to FIG. 10, the display device 200 may use the obtained multiple pieces of matching information to recommend additional contents for the user.

In an embodiment of the disclosure, the display device 200 may obtain the multiple pieces of matching information according to different weights. For example, referring to FIG. 9, the display device 200 may set weights to 6 and 2 for video 1 and video 2 about a soccer match. Furthermore, the display device 200 may provide a suitable content for the user by using the multiple pieces of matching information with different weights.

In an embodiment of the disclosure, the display device 200 may use the multiple pieces of matching information to recommend a site that is likely to be preferred by the user. For example, video 1 and video 2 are about team A among soccer teams, and the display device 200 may determine that the user of the display device 200 has a high preference of team A. Accordingly, the display device 200 may provide a recommended site by considering the multiple pieces of matching information. For example, referring to FIG. 10, site 1000 that sells team A's goods may be recommended for the user.

In an embodiment of the disclosure, the display device 200 may use the multiple pieces of matching information to recommend a channel that is likely to be preferred by the user. For example, referring to FIG. 10, the display device 200 may determine that the user of the display device 200 has a high preference of soccer matches and recommend the user a content 1010 related to the soccer being played on another channel.

A method according to an embodiment of the disclosure may be stored in a machine-readable storage medium, which may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the disclosure, the aforementioned method according to the various embodiments of the disclosure may be provided in a computer program product. The computer program product may be a commercial product that may be traded between a seller and a buyer. The computer program product may be distributed in the form of a machine-readable storage medium (e.g., a CD-ROM) or distributed directly between two user devices (e.g., smart phones) or online (e.g., downloaded or uploaded). In the case of the online distribution, at least part of the computer program product (e.g., a downloadable app) may be at least temporarily stored or arbitrarily created in a storage medium that may be readable to a device such as a server of the manufacturer, a server of the application store, or a relay server.

Several embodiments have been described, but a person of ordinary skill in the art will understand and appreciate that various modifications can be made without departing the scope of the disclosure. Thus, it will be apparent to those of ordinary skill in the art that the disclosure is not limited to the embodiments described, but can encompass not only the appended claims but the equivalents. For example, an element described in the singular form may be implemented as being distributed, and elements described in a distributed form may be implemented as being combined.

The scope of the disclosure is defined by the appended claims, and it will be understood by those of ordinary skill in the art that various changes in form and details may be made without departing from the spirit and scope of the disclosure as defined by the appended claims and their equivalents.

As technical means to attain the aforementioned technical objectives, an operation method of a display device may include receiving video signals of multiple videos; processing the received multiple video signals and generating a mixed video from the processed multiple video signals; extracting multiple fingerprints corresponding to the respective multiple video signals; transmitting the extracted multiple fingerprints to a server; and obtaining multiple pieces of matching information for the respective multiple fingerprints from the server.

In the method according to an embodiment of the disclosure, the extracting of the multiple fingerprints may include obtaining multiple video frames corresponding to the respective multiple videos; and extracting multiple fingerprints based on the obtained multiple video frames.

In the method according to an embodiment of the disclosure, the extracting of the multiple fingerprints may include obtaining a video frame of the mixed video from the mixed video; obtaining multiple video frames corresponding to the respective multiple videos by cropping the video frame of the mixed video; and extracting multiple fingerprints based on the multiple video frames.

In the method according to an embodiment of the disclosure, the generating of the mixed video may include generating a mixed video based on screen split information for the multiple videos, and the extracting of the multiple fingerprints may include obtaining multiple video frames corresponding to the respective multiple videos by cropping the video frame of the mixed video according to the screen split information.

In the method according to an embodiment of the disclosure, the extracting of the multiple fingerprints may include detecting at least one border line between multiple videos in the video frame of the mixed video, and obtaining multiple video frames corresponding to the respective multiple videos by cropping the video frame of the mixed video based on the detected at least one border line.

In the method according to an embodiment of the disclosure, the transmitting of the extracted multiple fingerprints to the server may include transmitting each of the extracted multiple fingerprints for each of the multiple videos to the server.

In the method according to an embodiment of the disclosure, the transmitting of the extracted multiple fingerprints to the server may include transmitting the extracted multiple fingerprints as a whole to the server.

In the method according to an embodiment of the disclosure, the obtaining of the multiple pieces of matching information may include determining multiple weights for the multiple pieces of matching information corresponding to the multiple videos based on the screen split information used to generate the mixed video, and obtaining multiple pieces of matching information corresponding to the respective multiple fingerprints according to the determined multiple weights.

In the method according to an embodiment of the disclosure, the obtaining of the multiple pieces of matching information may include identifying a video having sound output from the display device and obtaining the multiple pieces of matching information corresponding to the respective multiple fingerprints by setting a preset weight for matching information for the identified video.

In the method according to an embodiment of the disclosure, the multiple pieces of matching information may include at least one of genre information for the multiple videos and channel information for the multiple videos.

According to a second aspect of the disclosure, a display device may include a display displaying a mixed view in a multi-view; a communication module; a memory storing one or more instructions; and at least one processor configured to execute the one or more instructions, and the at least one processor may execute the one or more instructions to process video signals of received multiple videos, generate a mixed video from the processed multiple video signals, extract multiple fingerprints corresponding to the respective multiple video signals, control the communication module to transmit the multiple fingerprints to a server, and obtain multiple pieces of matching information for the respective multiple fingerprints from the server.

The at least one processor may obtain multiple video frames corresponding to the respective multiple videos based on the processed multiple video signals, and extract multiple fingerprints based on the obtained multiple video frames.

The at least one processor may obtain a video frame of the mixed video from the mixed video, obtain multiple video frames corresponding to the respective multiple videos by cropping the video frame of the mixed video, and extract multiple fingerprints based on the multiple video frames.

The at least one processor may generate the mixed video based on screen split information for the multiple videos, and obtain multiple video frames corresponding to the respective multiple videos by cropping a video frame of the mixed video according to the screen split information.

The at least one processor may detect at least one border line between the multiple videos in the video frame of the mixed video, and obtain multiple video frames corresponding to the respective multiple videos by cropping the video frame of the mixed video based on the detected at least one border line.

The at least one processor may control the communication module to transmit each of the extracted multiple fingerprints for each of the multiple videos to the server.

The at least one processor may control the communication module to transmit the extracted multiple fingerprints as a whole to the server.

The at least one processor may determine multiple weights for the multiple pieces of matching information corresponding to the multiple videos based on the screen split information used to generate the mixed video, and obtain multiple pieces of matching information corresponding to the respective multiple fingerprints according to the determined multiple weights.

The display device may further include an audio output interface , and the at least one processor may identify a video having sound output from the audio output interface from among the multiple videos, and obtain the multiple pieces of matching information corresponding to the respective multiple fingerprints by setting a preset weight for matching information for the identified video.

The multiple pieces of matching information may include at least one of genre information for the multiple videos and channel information for the multiple videos.

According to a third aspect of the disclosure, a recording medium may include a computer-readable recording medium having recorded thereon a program for executing the method, on a computer.

## Claims

1. A display device (200) comprising:
a display (210) displaying a mixed video in a multi-view;
a communication module (230);
a memory (240) storing one or more instructions; and
at least one processor (220) configured to execute the one or more instructions,
wherein the at least one processor (220) is configured to execute the one or more instructions to process video signals of received multiple videos, generate the mixed video from the processed multiple video signals, and extract multiple fingerprints corresponding to the respective multiple video signals, control the communication module (230) to transmit the multiple fingerprints to a server (100), and obtain multiple pieces of matching information for the respective multiple fingerprints from the server (100).

2. The display device of claim 1, wherein
the at least one processor (220) is configured to obtain multiple video frames corresponding to the respective multiple videos based on the processed multiple video signals, and extract the multiple fingerprints based on the obtained multiple video frames.

3. The display device of any of claims 1 to 2, wherein
the at least one processor (220) is configured to obtain a video frame of the mixed video from the mixed video, obtain multiple video frames corresponding to the respective multiple videos by cropping the video frame of the mixed video, and extract the multiple fingerprints based on the multiple video frames.

4. The display device of claim 3, wherein
the at least one processor (220) is configured to generate the mixed video based on screen split information for the multiple videos, and obtain multiple video frames corresponding to the respective multiple videos by cropping the video frame of the mixed video according to the screen split information.

5. The display device of claim 3, wherein
the at least one processor (220) is configured to detect at least one border line between the multiple videos in the video frame of the mixed video, and obtain multiple video frames corresponding to the respective multiple videos by cropping the video frame of the mixed video based on the detected at least one border line.

6. The display device of any of claims 1 to 5, wherein
the at least one processor (220) is configured to control the communication module (230) to transmit each of the extracted multiple fingerprints for each of the multiple videos to the server (100).

7. The display device of any of claims 1 to 6, wherein
the at least one processor (220) is configured to control the communication module (230) to transmit the extracted multiple fingerprints as a whole to the server (100).

8. The display device of any of claims 1 to 7, wherein
the at least one processor (220) is configured to determine multiple weights for the multiple pieces of matching information corresponding to the multiple videos based on the screen split information used to generate the mixed video, and obtain the multiple pieces of matching information corresponding to the respective multiple fingerprints according to the determined multiple weights.

9. The display device of any of claims 1 to 8,
further comprising: an audio output interface,
wherein the at least one processor (220) is configured to identify a video with which sound is output from the audio output interface from among the multiple videos, and obtain the multiple pieces of matching information corresponding to the respective multiple fingerprints by setting a preset weight for matching information for the identified video.

10. The display device of any of claims 1 to 9, wherein
the multiple pieces of matching information comprise at least one of genre information for the multiple videos and channel information for the multiple videos.

11. An operation method of a display device (200), the operation method comprising:
receiving video signals of multiple videos;
processing the received multiple video signals and generating a mixed video from the processed multiple video signals;
extracting multiple fingerprints corresponding to the respective multiple video signals;
transmitting the extracted multiple fingerprints to a server (100); and
obtaining multiple pieces of matching information for the respective multiple fingerprints from the server (100).

12. The operation method of claim 11, wherein the extracting of the multiple fingerprints comprises:
obtaining multiple video frames corresponding to the respective multiple videos; and
extracting the multiple fingerprints based on the obtained multiple video frames.

13. The operation method of any of claims 11 to 12, wherein the extracting of the multiple fingerprints comprises:
obtaining a video frame of the mixed video from the mixed video;
obtaining multiple video frames corresponding to the respective multiple videos by cropping the video frame of the mixed video; and
extracting the multiple fingerprints based on the multiple video frames.

14. The operation method of claim 13, wherein the generating of the mixed video comprises
generating the mixed video based on screen split information for the multiple videos, and
wherein the extracting of the multiple fingerprints comprises
obtaining multiple video frames corresponding to the respective multiple videos by cropping the video frame of the mixed video according to the screen split information.

15. A computer-readable recording medium having recorded thereon a program for executing the method of any of claims 11 to 14, on a computer.
